# EUROPEAN PATENT APPLICATION

(11) **EP 3 089 017 A1**
(43) Date of publication of application: **02.11.2016**
(21) Application number: 13900010.3
(22) Date of filing: 27.12.2013
(51) Int. Cl.: G06F 3/0484

(54) **CROSS-INTERFACE DATA TRANSFER METHOD AND TERMINAL**

(71) Applicant: Yulong Computer Telecommunication Scientific (Shenzhen) Co., Ltd., Shenzhen, Guangdong 518057 (CN)
(72) Inventor: ZHOU, Changzhan, Shenzhen Guangdong 518057 (CN)
(74) Representative: Johnson, Richard Alan
(86) International application number: PCT/CN2013/090705
(87) International publication number: WO 2015/096137

(57) **Abstract**

A cross-interface data transfer method and a terminal. The method comprises: when one or a plurality of data objects on a terminal interface is operated in a predetermined way, displaying on the terminal interface at least one other interface capable of receiving the one or a plurality of data objects; determining one target interface in the other interface, and transferring the one or a plurality of data objects to the target interface. An intuitional and convenient approach for data object transfer can improve the operation efficiency of data transfer.

## Description

### TECHNICAL FIELD

The present disclosure relates to communication technology field, and particularly to a cross-interface data transfer method and terminal.

### BACKGROUND

The rapid increase in speed and capacity of mobile terminals has allowed the installation of a plurality of applications in the terminal. Application icons on the terminal interface will be displayed on multiple pages if it is not big enough to accommodate all the icons on one page. Sometimes, it is desired to adjust the position of application icons, for example, cross-interface moving application icons, for example, moving an application icon from Page 1 to Page 2.

Currently, in order to cross-interface move an application icon, normally, the following operations will be needed: long-pressing and dragging the application icon to a certain position (such as the edge of the interface), keeping long-pressing and waiting for the interface switching to turn to next page. The above process will be repeated until a target page appears.

Similar to this, sometimes, it is desired to cross-interface move a file.

For inner-terminal transfer, the following operations can be adopted: executing "copy" operation on the file on an original interface, jumping to a target interface, and executing "paste" operation. That is to say, in order to move a file, it is needed to jump between the original interface and the target interface.

For inter-terminal transfer, the file movement can be achieved as follows when Bluetooth transmission function is enabled: selecting the file to be transmitted on an original terminal, checking the Bluetooth option in the function menu, and transmitting the file to a target terminal with which a Bluetooth connection has been established.

A fast and convenient cross-interface data transfer technology is desired.

### SUMMARY

The present disclosure aims to provide a novel cross-interface data transfer technology, with which cross-interface data transfer can be achieved intuitively and conveniently.

According to a first aspect of the disclosure, it is provided a cross-interface data transfer method. The method includes: displaying on a terminal interface at least one other interface capable of receiving one or a plurality of data objects when the one or a plurality of data objects on the terminal interface is operated in a predetermined way; determining one target interface in the at least one other interface, and transferring the one or a plurality of data objects to the target interface.

Data objects that can be operated are displayed on the terminal interface. Take an interface of a computer as an example, the data object can be any of application icons, word documents, folders, and the like, and operations executed thereon can be deleting, copying, moving, and the like. When a data object on the terminal interface is being operated in a specific way such as long-pressing, cross-interface data transfer is deemed to be conducted. At this point, multiple interfaces capable of receiving the data object will be displayed on the terminal interface for the user to select, and the target interface can be selected therefrom. After the target interface is determined, the data object(s) being operated, such as being long-pressed, will be transferred to the target interface automatically, without the need to turn the page in a page-by-page manner, jump to another interface, or enter into a specific operation interface to transfer data object, it will be helpful to improve operational efficiency. Since all the interfaces capable of receiving the data object are displayed on the terminal interface, the user can know the status of the current terminal interface and all other interfaces capable of receiving the data object more clearly, and the process of data transfer could be more intuitively.

Preferably, in the above-mentioned technical scheme, the method further includes: detecting trajectory direction of dragging of the one or a plurality of data objects upon dragging. The at least one other interface will be displayed adaptively according to the trajectory direction.

As described above, when the at least one other interface is displayed on the terminal interface, the trajectory direction of dragging of the data object can be detected. In order to facilitate interface selection, the at least one other interface can be displayed flexibly according to the trajectory direction, that is to say, the display position of the at least one other interface is not fixed and can be adjusted according to the operation action of the user. Alternatively, only the interface in the trajectory direction will be displayed.

Preferably, in any of the above-mentioned technical scheme, the at least one other interface is displayed in the edge region of the terminal interface corresponding to the trajectory direction.

As described above, by displaying the interface capable of receiving the data object in the vicinity of the end point position of the trajectory direction, the user can move or drag the data object to the target interface conveniently. For example, if it is detected that the dragging direction is vertically downward, the at least one other interface will be displayed in the lower edge region of the screen; similar to this, if it is detected that the dragging direction is horizontally to the left, the at least one other interface will be displayed in the left edge region of the screen.

Preferably, in any of the above-mentioned technical scheme, one interface in the at least one other interface will be determined to be the target interface if the one or a plurality of data objects is dragged to the interface and stayed for a predetermined time length. As an example, in order to select the target interface from the at least one other interface, the data object can be dragged to the selected interface and stay there for three seconds before release, the selected interface will be the target interface.

Preferably, in any of the above-mentioned technical scheme, the method further comprises: searching for an external device capable of connecting to the terminal when the one or a plurality of data objects is being operated; acquiring an interface of the external device and other menu interface of the terminal, wherein the at least one other interface comprises the interface of the external device and the other menu interface of the terminal.

In the above-mentioned technical scheme, when the data object on the terminal interface is being operated, the terminal will search for devices which can communicate with it and display the interfaces of the devices. These interfaces can be pre-stored in the terminal and will be called for display when these devices are found, which can accelerate display speed. If no communication is established between these devices and the terminal in advance, the terminal will broadcast connection request and determine whether there is any response from the devices, if yes, a connection can be established, and an interface corresponding to the device capable of establishing connection will be displayed.

Preferably, in the above-mentioned technical scheme, the method further comprises: acquiring a relative position relationship between the terminal and the external device, determining that the interface of the external device will be displayed in the edge region of the terminal screen pointing to the external device according to the relative position relationship; displaying the interface of the external device in the edge region of the terminal screen when the one or a plurality of data objects entering into the edge region of the terminal screen.

In the above-mentioned technical scheme, the relative position relationship between the terminal and the external device can be acquired according to the signal interaction between the two. For example, as to a remote controller and a TV set, the TV set can receive a remote controlling instruction from the remote controller if the controller is in a certain range, otherwise, the instruction will not be responded by the TV set. Based on this principle, the terminal can know the general position of the external device (in this example, the TV set). The interface of the TV set will be displayed on the left side of the terminal screen if the TV set is currently on the left of the terminal; that is, the interface and the position of the TV set are correlated, the user can estimate a general display position of the interface of the external device on the terminal screen intuitively, and consequently, drag the data object pertinently.

Preferably, in any of the above-mentioned technical scheme, the method further includes: switching to an interface of the terminal on which the one or a plurality of data objects will be displayed if the target interface is the interface of the terminal; transmitting the one or a plurality of data objects to an interface of the external device on which the one or a plurality of data objects will be displayed if the target interface is the interface of the external device.

In the technical scheme described above, in addition to the interface(s) of the external device, the at least one other interface can also be a different interfaces other than the currently displayed interface of the terminal. For example, the currently displayed page is menu page one of the terminal, the at least one other interface includes menu page two to menu page four. If the target interface is an interface of the terminal, switch to display the target interface directly and show the position on the target interface that the data object being operated will be displayed. For example, the target interface is menu page three; the terminal will display this page directly and show the data object being operated on this page either. On the other hand, if the target interface is an interface of the external device, the data object being operated will be transmitted to a corresponding external device, as a result, data transmitting is achieved without page jumping and it is simple to operate.

Preferably, in any of the above-mentioned technical scheme, the at least one other interface is displayed in the form of a thumbnail or symbol.

Preferably, in any of the above-mentioned technical scheme, the data object includes at least one of the following: application icons, documents, folders, audio files or video files, and pictures.

According to another aspect of the disclosure, it is provided a terminal. The terminal includes: a displaying unit, configured to display on a terminal interface at least one other interface capable of receiving one or a plurality of data objects when the one or a plurality of data objects on the terminal interface is operated in a predetermined way; an cross-interface transferring unit, configured to determine one target interface in the at least one other interface and transfer the one or a plurality of data objects to the target interface.

Data objects that can be operated are displayed on the terminal interface. Take an interface of a computer as an example, the data object can be any of application icons, word documents, folders, and the like, and operations executed thereon can be deleting, copying, moving, and the like. When a data object on the terminal interface is being operated in a specific way such as long-pressing, cross-interface data transfer is deemed to be conducted. At this point, multiple interfaces capable of receiving the data object will be displayed on the terminal interface for the user to select, and the target interface can be selected therefrom. After the target interface is determined, the data object(s) being operated, such as being long-pressed, will be transferred to the target interface automatically, without the need to turn the page in a page-by-page manner, jump to another interface, or enter into a specific operation interface to transfer data object, it will be helpful to improve operational efficiency. Since all the interfaces capable of receiving the data object are displayed on the terminal interface, the user can know the status of the current terminal interface and all other interfaces capable of receiving the data object more clearly, and the process of data transfer could be more intuitively.

Preferably, in the above-mentioned technical scheme, the displaying unit further includes: a detecting unit, configured to detect the trajectory direction of dragging of the one or a plurality of data objects upon dragging; and an adjusting unit, configured to adjust the displaying unit to display the at least one other interface adaptively according to the trajectory direction.

As described above, when the at least one other interface is displayed on the terminal interface, the trajectory direction of dragging of the data objects can be detected. In order to facilitate interface selection, the at least one other interface can be displayed flexibly according to the trajectory direction, that is to say, the display position of the at least one other interface is not fixed and can be adjusted according to the operation action of the user. Alternatively, only the interface in the trajectory direction will be displayed.

Preferably, in any of the above-mentioned technical scheme, the displaying unit is further configured to display the at least one other interface in the edge region of the terminal interface corresponding to the trajectory direction.

As described above, by displaying the interface capable of receiving the data object in the vicinity of the end point position of the trajectory direction, the user can move or drag the data object to the target interface conveniently. For example, if it is detected that the dragging direction is vertically downward, the at least one other interface will be displayed in the lower edge region of the screen; similar to this, if it is detected that the dragging direction is horizontally to the left, the at least one other interface will be displayed in the left edge region of the screen.

Preferably, in any of the above-mentioned technical scheme, the cross-interface transferring unit further includes: a target interface selecting unit, configured to determine one interface in the at least one other interface to be the target interface if the one or a plurality of data objects is dragged to the interface and stayed for a predetermined time length. As an example, in order to select the target interface from the at least one other interface, the data object can be dragged to the selected interface and stay there for three seconds before release, the selected interface will be the target interface.

Preferably, in any of the above-mentioned technical scheme, the displaying unit further includes: a searching unit, configured to search for an external device capable of connecting to the terminal when the one or a plurality of data objects is being operated; an acquiring unit, configured to acquire an interface of the external device and other menu interface of the terminal, wherein the at least one other interface comprises the interface of the external device and the other menu interface of the terminal.

In the above-mentioned technical scheme, when the data object on the terminal interface is being operated, the terminal will search for devices which can communicate with it and display the interfaces of the devices. These interfaces can be pre-stored in the terminal and will be called for display when these devices are found, which can accelerate display speed. If no communication is established between these devices and the terminal in advance, the terminal will broadcast connection request and determine whether there is any response from the devices, if yes, a connection can be established, and an interface corresponding to the device capable of establishing connection will be displayed.

Preferably, in the above-mentioned technical scheme, the acquiring unit is further configured to acquire a relative position relationship between the terminal and the external device, and determine that the interface of the external device will be displayed in the edge region of the terminal screen pointing to the external device according to the relative position relationship; and the displaying unit is further configured to display the interface of the external device in the edge region of the terminal screen when the one or a plurality of data objects entering into the edge region of the terminal screen.

In the above-mentioned technical scheme, the relative position relationship between the terminal and the external device can be acquired according to the signal interaction between the two. For example, as to a remote controller and a TV set, the TV set can receive a remote controlling instruction from the remote controller if the controller is in a certain range, otherwise, the instruction will not be responded by the TV set. Based on this principle, the terminal can know the general position of the external device (in this example, the TV set). The interface of the TV set will be displayed on the left side of the terminal screen if the TV set is currently on the left of the terminal; that is, the interface and the position of the TV set are correlated, the user can estimate a general display position of the interface of the external device on the terminal screen intuitively, and consequently, drag the data object pertinently.

Preferably, in any of the above-mentioned technical scheme, the cross-interface transferring unit includes: a switching unit, configured to switch to an interface of the terminal on which the one or a plurality of data objects will be displayed if the target interface is the interface of the terminal; a data transmitting unit, configured to transmit the one or a plurality of data objects to an interface of the external device on which the one or a plurality of data objects will be displayed if the target interface is the interface of the external device.

In the technical scheme described above, in addition to the interface(s) of the external device, the at least one other interface can also be a different interface(s) other than the currently displayed interface of the terminal. For example, the currently displayed page is menu page one of the terminal, the at least one other interface includes menu page two to menu page four. If the target interface is an interface of the terminal, switch to display the target interface directly and show the position on the target interface that the data object being operated will be displayed. For example, the target interface is menu page three; the terminal will display this page directly and show the data object being operated on this page either. On the other hand, if the target interface is an interface of the external device, the data object being operated will be transmitted to a corresponding external device, as a result, data transmitting is achieved without page jumping and it is simple to operate.

Preferably, in any of the above-mentioned technical scheme, the at least one other interface is displayed in the form of a thumbnail or symbol.

Preferably, in any of the above-mentioned technical scheme, the data object includes at least one of the following: application icons, documents, folders, audio files or video files, and pictures.

According to a further aspect of the disclosure, it is provided a program product stored in a non-volatile machine readable medium for cross-interface data transfer. The program product including program code, when executed on a computer system, adapted to perform the following: displaying on a terminal interface at least one other interface capable of receiving one or a plurality of data objects when the one or a plurality of data objects on the terminal interface is operated in a predetermined way; determining one target interface in the at least one other interface, and transferring the one or a plurality of data objects to the target interface.

According to a further aspect of the disclosure, it is provided a non-volatile machine readable medium storing a program product for cross-interface data transfer. The program product including program code, when executed on a computer system, adapted to perform the following: displaying on a terminal interface at least one other interface capable of receiving one or a plurality of data objects when the one or a plurality of data objects on the terminal interface is operated in a predetermined way; determining one target interface in the at least one other interface, and transferring the one or a plurality of data objects to the target interface.

According to a further aspect of the disclosure, it is provided a computer readable program, when executed on a computer system, adapted to perform any of the cross-interface data transfer method as described above.

According to a further aspect of the disclosure, it is provided a storage medium storing computer readable program. The computer readable program, when executed on a computer system, adapted to perform any of the cross-interface data transfer method as described above.

### BRIEF DESCRIPTION OF THE DRAWINGS

FIG. 1 is a flowchart illustrating a cross-interface data transfer method according to an embodiment of the disclosure.
FIG. 2 is a flowchart illustrating a detailed cross-interface data transfer method according to the embodiment of the disclosure.
FIG. 3 is a schematic diagram illustrating an exemplary interface of cross-interface data transfer according to an embodiment of the disclosure.
FIG. 4 is a schematic diagram illustrating an exemplary interface of cross-interface data transfer according to another embodiment of the disclosure.
FIG. 5 is a block diagram illustrating a terminal of an embodiment of the disclosure.

### DETAILED DESCRIPTION OF ILLUSTRATED EMBODIMENTS

In order to more clearly understand the above object, features, and advantages of the present invention, it will be described in further detail with refer to the accompanying drawings and the following embodiments. It should be noted that, the embodiments and the features thereof can be combined with each other without confliction.

In the following description, numerous specific details are set forth in order to fully understand the present invention, but the present invention can also be achieved in other ways different from the embodiments described herein, therefore, the scope of the present invention is not limited to the following specific embodiments.

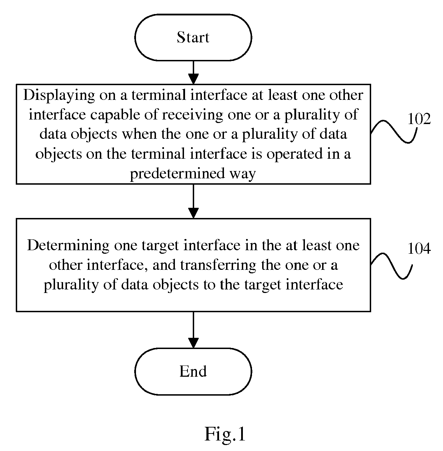

According to an embodiment of the disclosure, it is provided a cross-interface data transfer method. FIG. 1 is a flowchart illustrating the method.

As shown in FIG.1, the method includes step 102 and step 104, in which: step 102, displaying on a terminal interface at least one other interface capable of receiving one or a plurality of data objects when the one or a plurality of data objects on the terminal interface is operated in a predetermined way; step 104, determining one target interface in the at least one other interface, and transferring the one or a plurality of data objects to the target interface.

Data objects that can be operated are displayed on the terminal interface. Take an interface of a computer as an example, the data object can be any of application icons, word documents, folders, and the like, and operations executed thereon can be deleting, copying, moving, and the like. When a data object on the terminal interface is being operated in a specific way such as long-pressing, cross-interface data transfer is deemed to be conducted. At this point, multiple interfaces capable of receiving the data object will be displayed on the terminal interface for the user to select, and the target interface can be selected therefrom. After the target interface is determined, the data object(s) being operated, such as being long-pressed, will be transferred to the target interface automatically, without the need to turn the page in a page-by-page manner, jump to another interface, or enter into a specific operation interface to transfer data object, it will be helpful to improve operational efficiency. Since all the interfaces capable of receiving the data object are displayed on the terminal interface, the user can know the status of the current terminal interface and all other interfaces capable of receiving the data object more clearly, and the process of data transfer could be more intuitively.

Preferably, in step 102, the method further includes: detecting trajectory direction of dragging of the one or a plurality of data objects upon dragging. The at least one other interface will be displayed adaptively according to the trajectory direction.

As described above, when the at least one other interface is displayed on the terminal interface, the trajectory direction of dragging of the data objects can be detected. In order to facilitate interface selection, the at least one other interface can be displayed flexibly according to the trajectory direction, that is to say, the display position of the at least one other interface is not fixed and can be adjusted according to the operation action of the user. Alternatively, only the interface in the trajectory direction will be displayed. For example, in an IOS system, pages cannot be displayed circularly. Via the technical scheme described above, pages other than the current page and in the moving direction of the data object will be displayed. If the current page is page three and a left sliding gesture is detected, page one and page two, which is on the left of page three, will be displayed in the form of thumbnail on page three.

Preferably, in any of the above-mentioned technical scheme, the at least one other interface is displayed in the edge region of the terminal interface corresponding to the trajectory direction.

As described above, by displaying the interface capable of receiving the data object in the vicinity of the end point position of the trajectory direction, the user can move or drag the data object to the target interface conveniently. For example, if it is detected that the dragging direction is vertically downward, the at least one other interface will be displayed in the lower edge region of the screen; similar to this, if it is detected that the dragging direction is horizontally to the left, the at least one other interface will be displayed in the left edge region of the screen.

Preferably, in any of the above-mentioned technical scheme, one interface in the at least one other interface will be determined to be the target interface if the one or a plurality of data objects is dragged to the interface and stayed for a predetermined time length. As an example, in order to select the target interface from the at least one other interface, the data object can be dragged to the selected interface and stay there for three seconds before release, the selected interface will be the target interface.

Preferably, in any of the above-mentioned technical scheme, the method further comprises: searching for an external device capable of connecting to the terminal when the one or a plurality of data objects is being operated; acquiring an interface of the external device and other menu interface of the terminal, wherein the at least one other interface comprises the interface of the external device and the other menu interface of the terminal.

In the above-mentioned technical scheme, when the data object on the terminal interface is being operated, the terminal will search for devices which can communicate with it and display the interfaces of the devices. These interfaces can be pre-stored in the terminal and will be called for display when these devices are found, which can accelerate display speed. If no communication is established between these devices and the terminal in advance, the terminal will broadcast connection request and determine whether there is any response from the devices, if yes, a connection can be established, and an interface corresponding to the device capable of establishing connection will be displayed.

Preferably, in the above-mentioned technical scheme, the method further comprises: acquiring a relative position relationship between the terminal and the external device, determining that the interface of the external device will be displayed in the edge region of the terminal screen pointing to the external device according to the relative position relationship; displaying the interface of the external device in the edge region of the terminal screen when the one or a plurality of data objects entering into the edge region of the terminal screen.

In the above-mentioned technical scheme, the relative position relationship between the terminal and the external device can be acquired according to the signal interaction between the two. For example, as to a remote controller and a TV set, the TV set can receive a remote controlling instruction from the remote controller if the controller is in a certain range, otherwise, the instruction will not be responded by the TV set. Based on this principle, the terminal can know the general position of the external device (in this example, the TV set). The interface of the TV set will be displayed on the left side of the terminal screen if the TV set is currently on the left of the terminal; that is, the interface and the position of the TV set are correlated, the user can estimate a general display position of the interface of the external device on the terminal screen intuitively, and consequently, drag the data object pertinently.

Preferably, in any of the above-mentioned technical scheme, the method further includes: switching to an interface of the terminal on which the one or a plurality of data objects will be displayed if the target interface is the interface of the terminal; transmitting the one or a plurality of data objects to an interface of the external device on which the one or a plurality of data objects will be displayed if the target interface is the interface of the external device.

In the technical scheme described above, in addition to the interface(s) of the external device, the at least one other interface can also be a different interface(s) other than the currently displayed interface of the terminal. For example, the currently displayed page is menu page one of the terminal, the at least one other interface includes menu page two to menu page four. If the target interface is an interface of the terminal, switch to display the target interface directly and show the position on the target interface that the data object being operated will be displayed. For example, the target interface is menu page three; the terminal will display this page directly and show the data object being operated on this page either. On the other hand, if the target interface is an interface of the external device, the data object being operated will be transmitted to a corresponding external device, as a result, data transmitting is achieved without page jumping and it is simple to operate.

Preferably, in any of the above-mentioned technical scheme, the at least one other interface displayed on the terminal interface is in the form of a thumbnail or symbol; the data object includes at least one of the following: application icons, documents, folders, audio files or video files, and pictures.

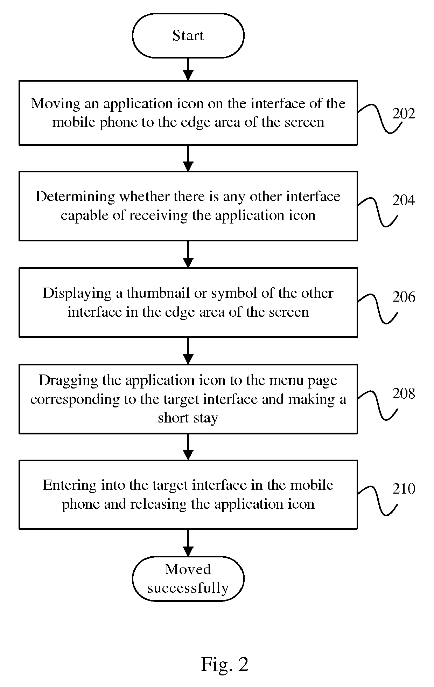

The cross-interface data transfer method according to the embodiment of the disclosure will now be described in detail with reference to FIG. 2- FIG. 4.

An example in which the terminal is a mobile phone should make the method easier to understand. As shown in FIG. 2, the cross-interface data transfer method according to the embodiment can be achieved via step 202-step 210 as follows:

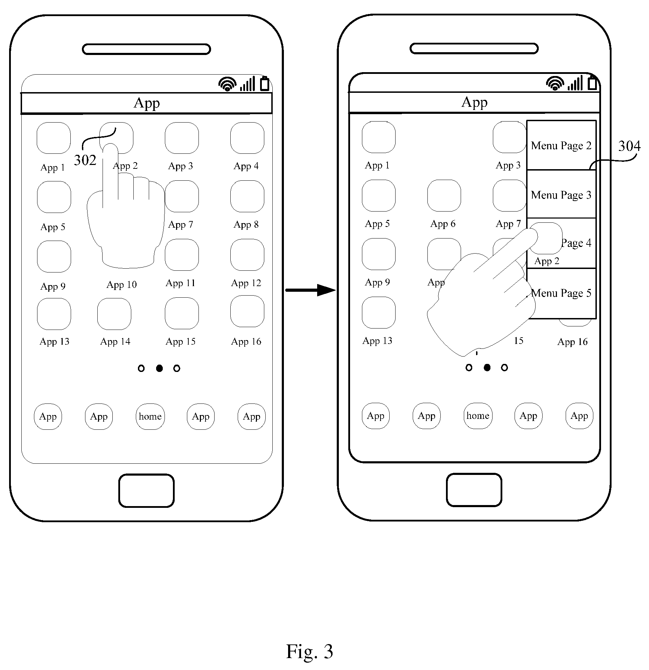

Step 202, moving an application icon on the interface of the mobile phone to the edge area of the screen, such as the right edge area of the screen, by a user. Refer to FIG.3, for example, application icon 302 on the interface of the mobile phone is selected and dragged to the right area of the screen.

Step 204, determining whether there is any other interface capable of receiving the application icon 302. For example, the mobile phone can search for external devices with which a connection can be established, if no external device is found, the mobile phone will then determine whether there is any other interface capable of receiving the application icon 302 inside.

Step 206, displaying a thumbnail or symbol of the other interface determined in step 204 in the edge area of the screen. Suppose four other interfaces are determined to be capable of receiving the application icon 302 being moved. As shown in FIG. 3, four menu pages 304 corresponding to the determined interfaces are displayed in the right edge of the mobile phone. In order to facilitate the user to select a certain menu page as a target interface, scrolling display is enabled if the right edge area is not sufficient for displaying all the menu pages.

Step 208, dragging the application icon 302 to the menu page corresponding to the target interface and making a short stay, such as two seconds, by long-pressing, for example.

Step 210, entering (that is, displaying) into the target interface in the mobile phone, and the user can release the application icon 302 at this point or after a short stay.

Continue to refer to FIG. 3, the user can drag the application icon 302 to the position of menu page 4 and make a short stay to wait for the mobile phone enter into the target interface. The application icon 302 will be released after the mobile phone entering into the target interface; in this way, the application icon 302 is moved to the target interface successfully. As can be seen from the above description, when it is desired to move the application icon 302 to the target interface, that is, the interface corresponding to menu page 4, only relatively simple operation is needed. In the related art, an application icon is long-pressed and dragged to wait for page turning in a page-by-page manner, and it cannot be released until switching to the target interface (for example, the last interface). Compared to this, the operational efficiency is improved via operations according to the embodiment of the disclosure.

Application icon cross-interface transfer is achieved as described above. The present disclosure is not limited thereto and can also be used to transfer file. Based on this, another embodiment of the present disclosure, which relates to file transfer, is provided.

In practice, a terminal can establish a communication connection with an external device, during which file transmitting and receiving may be involved. According to the operation method in the related art, after the file to be transmitted has been selected, an operation menu will be called out for the user to check the Bluetooth option, and the file will be transmitted to another device which has established Bluetooth pairing with the terminal. It can be seen that the above process is complicated. In order to facilitate the operation of the user, the present disclosure will take into account the position relationship between the terminal and the external device, and determine the display position of the interface of the external device on the terminal screen based on the position relationship, thereby the user can know the direction to drag the selected data object intuitively.

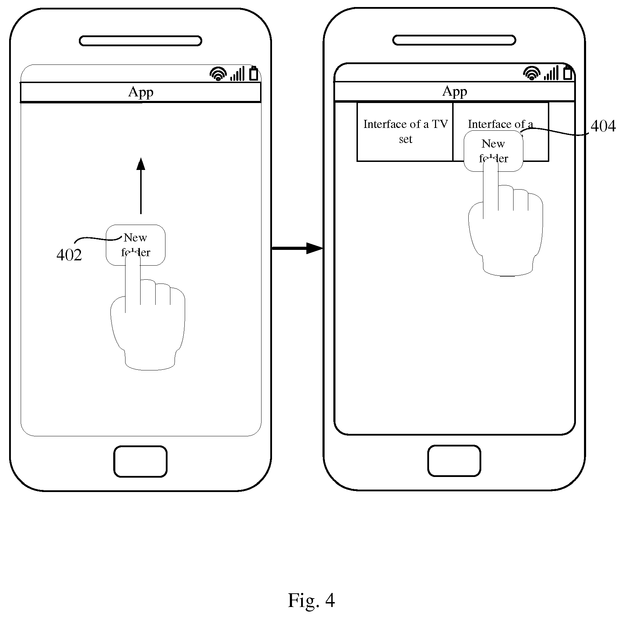

The embodiment relates to cross-interface file transfer will now be described with reference to FIG. 4. As shown in FIG. 4, suppose right in front of a user, there are external devices including a TV set and a tablet PC, if the user holds a mobile phone, the TV set and the tablet PC will be in front of the mobile phone either. Thus, the terminal, that is, the mobile phone, determines to display the interfaces of the external devices on the top side of the terminal screen by fault so as to facilitate user operation. Similarly, if the TV set and the tablet PC is on the left side of the mobile phone, the interfaces of the TV set and the tablet PC can be displayed in the left region area of the screen of the mobile phone. Thus, the display position of the interface of the external device can be set according to the relative position relationship between the external device and the terminal.

Actually, when it is desired to move a new folder 402 to the tablet PC, the user has already known that the interface of the tablet PC will be displayed on the top side of the screen of the mobile phone. The user can drag the new folder 402 upward to enter the edge region of the screen where the interfaces of the TV set and the tablet PC will be displayed. The user continues to drag the new folder 402 to the displayed interface of the tablet PC 404 and stays for two seconds, and then the new folder 402 will be transmitted to the tablet PC 404. So far, the cross-interface file transfer is achieved with simple and intuitive operation.

As another example, on the screen of the mobile phone, the interface of the tablet PC can be displayed in the left region area if the tablet PC is on the left of the mobile phone, and other mobile phone related interfaces can be displayed in the lower edge region.

There are many kinds of methods to determine the above-mentioned position relationship, for example, signal transmission information such as signal transmission direction and a detecting device such as a gyroscope can be used to determine the general position of the external device.

As another realization, the display position of the interface of the external device can be adjusted adaptively according to user operating trajectory without considering the position of the external device. For example, assume that the new folder 402 is long-pressed to move downward. The terminal detects the direction of the operating trajectory of the user, and displays all the interfaces capable of receiving the file on the lower edge region of the screen based on the detection that the direction of the operating trajectory is downward. Thus, the interface can be displayed dynamically according to the operating trajectory of the user.

The displaying of the interface capable of receiving data object, according to the position of the external device or according to the operating trajectory of the user, is for the purpose to navigate to the target interface quickly with reduced distance and number of dragging and provide the user with convenience.

In addition, the interface can be displayed in the form of a thumbnail or symbol in order to facilitate the identification of the interface by the user. The data object being moved can be application icons or files as described above, or, can be video files, documents, applications, folders, tables, and the like.

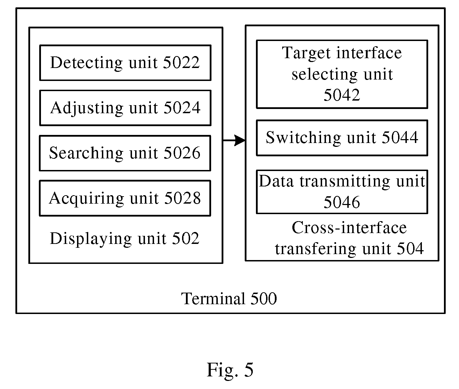

Hereinafter, a terminal according to the embodiment of the disclosure will be described with reference to FIG. 5, which is a block diagram illustrating the terminal.

As shown in FIG. 5, the terminal 500 according to the embodiment can include a displaying unit 502 and a cross-interface transferring unit 504. The displaying unit 502 is configured to display on a terminal interface at least one other interface capable of receiving one or a plurality of data objects when the one or a plurality of data objects on the terminal interface are operated in a predetermined way. The cross-interface transferring unit 504 is configured to determine one target interface in the at least one other interface and transfer the one or a plurality of data objects to the target interface.

Data objects that can be operated are displayed on the terminal interface. Take an interface of a computer as an example, the data object can be any of application icons, word documents, folders, and the like, and operations executed thereon can be deleting, copying, moving, and the like. When a data object on the terminal interface is being operated in a specific way such as long-pressing, cross-interface data transfer is deemed to be conducted. At this point, multiple interfaces capable of receiving the data object will be displayed on the terminal interface for the user to select, and the target interface can be selected therefrom. After the target interface is determined, the data object(s) being operated, such as being long-pressed, will be transferred to the target interface automatically, without the need to turn the page in a page-by-page manner, jump to another interface, or enter into a specific operation interface to transfer data object, it will be helpful to improve operational efficiency. Since all the interfaces capable of receiving the data object are displayed on the terminal interface, the user can know the status of the current terminal interface and all other interfaces capable of receiving the data object more clearly, and the process of data transfer could be more intuitively.

As shown in FIG. 5, the displaying unit may further include a detecting unit 5022 and an adjusting unit 5024. The detecting unit 5022 is configured to detect the trajectory direction of dragging of the one or a plurality of data objects upon dragging. The adjusting unit 5024 is configured to adjust the displaying unit 502 to display the at least one other interface adaptively according to the trajectory direction.

As described above, when the at least one other interface is displayed on the terminal interface, the trajectory direction of the dragging of the data objects can be detected. In order to facilitate interface selection, the at least one other interface can be displayed flexibly according to the trajectory direction, that is to say, the display position of the at least one other interface is not fixed and can be adjusted according to the operation action of the user. Alternatively, only the interface in the trajectory direction will be displayed. For example, in an IOS system, pages cannot be displayed circularly. Via the technical scheme described above, pages other than the current page and in the moving direction of the data object will be displayed. If the current page is page three and a left sliding gesture is detected, page one and page two, which is on the left of page three, will be displayed in the form of thumbnail on page three.

Preferably, the displaying unit 502 is further configured to display the at least one other interface in the edge region of the terminal interface corresponding to the trajectory direction.

As described above, by displaying the interface capable of receiving the data object in the vicinity of the end point position of the trajectory direction, the user can move or drag the data object to the target interface conveniently. For example, if it is detected that the dragging direction is vertically downward, the at least one other interface will be displayed in the lower edge region of the screen; similar to this, if it is detected that the dragging direction is horizontally to the left, the at least one other interface will be displayed in the left edge region of the screen.

Preferably, as shown in FIG. 5, the cross-interface transferring unit 504 can includes a target interface selecting unit 5042, which is configured to determine one interface in the at least one other interface to be the target interface if the one or a plurality of data objects is dragged to the interface and stayed for a predetermined time length. As an example, in order to select the target interface from the at least one other interface, the data object can be dragged to the selected interface and stay there for three seconds before release, the selected interface will be the target interface.

As shown in FIG. 5, the displaying unit 502 can further includes a searching unit 5026 and an acquiring unit 5028. The searching unit 5026 is configured to search for an external device capable of connecting to the terminal when the one or a plurality of data objects is being operated. The acquiring unit 5028 is configured to acquire an interface of the external device and other menu interface of the terminal, wherein the at least one other interface comprises the interface of the external device and the other menu interface of the terminal.

In the above-mentioned technical scheme, when the data object on the terminal interface is being operated, the terminal will search for devices which can communicate with it and display the interfaces of the devices. These interfaces can be pre-stored in the terminal and will be called for display when these devices are found, which can accelerate display speed. If no communication is established between these devices and the terminal in advance, the terminal will broadcast connection request and determine whether there is any response from the devices, if yes, a connection can be established, and an interface corresponding to the device capable of establishing connection will be displayed.

Preferably, in the above-mentioned technical scheme, the acquiring unit 5028 is further configured to acquire a relative position relationship between the terminal and the external device, and determine that the interface of the external device will be displayed in the edge region of the terminal screen pointing to the external device according to the relative position relationship; and the displaying unit 502 is further configured to display the interface of the external device in the edge region of the terminal screen when the one or a plurality of data objects entering into the edge region of the terminal screen.

In the above-mentioned technical scheme, the relative position relationship between the terminal and the external device can be acquired according to the signal interaction between the two. For example, as to a remote controller and a TV set, the TV set can receive a remote controlling instruction from the remote controller if the controller is in a certain range, otherwise, the instruction will not be responded by the TV set. Based on this principle, the terminal can know the general position of the external device (in this example, the TV set). The interface of the TV set will be displayed on the left side of the terminal screen if the TV set is currently on the left of the terminal; that is, the interface and the position of the TV set are correlated, the user can estimate a general display position of the interface of the external device on the terminal screen intuitively, and consequently, drag the data object pertinently.

Preferably, as shown in FIG.5, the cross-interface transferring unit 504 includes a switching unit 5044 and a data transmitting unit 5046. The switching unit 5044 is configured to switch to an interface of the terminal on which the one or a plurality of data objects will be displayed if the target interface is the interface of the terminal. The data transmitting unit 5046 is configured to transmit the one or a plurality of data objects to an interface of the external device on which the one or a plurality of data objects will be displayed if the target interface is the interface of the external device.

In the technical scheme described above, in addition to the interface(s) of the external device, the at least one other interface can also be a different interface(s) other than the currently displayed interface of the terminal. For example, the currently displayed page is menu page one of the terminal, the at least one other interface includes menu page two to menu page four. If the target interface is an interface of the terminal, switch to display the target interface directly and show the position on the target interface that the data object being operated will be displayed. For example, the target interface is menu page three; the terminal will display this page directly and show the data object being operated on this page either. On the other hand, if the target interface is an interface of the external device, the data object being operated will be transmitted to a corresponding external device, as a result, data transmitting is achieved without page jumping and it is simple to operate.

Preferably, in any of the above-mentioned technical scheme, the display unit 502 is configured to display on the terminal interface the at least one other interface in the form of a thumbnail or symbol. The data object includes at least one of the following: application icons, documents, folders, audio files or video files, and pictures.

According to another embodiment of the disclosure, it is provided a program product stored in a non-volatile machine readable medium for cross-interface data transfer. The program product including program code, when executed on a computer system, adapted to perform the following: displaying on a terminal interface at least one other interface capable of receiving one or a plurality of data objects when the one or a plurality of data objects on the terminal interface is operated in a predetermined way; determining one target interface in the at least one other interface, and transferring the one or a plurality of data objects to the target interface.

According to another embodiment of the disclosure, it is provided a non-volatile machine readable medium storing a program product for cross-interface data transfer. The program product including program code, when executed on a computer system, adapted to perform the following: displaying on a terminal interface at least one other interface capable of receiving one or a plurality of data objects when the one or a plurality of data objects on the terminal interface are operated in a predetermined way; determining one target interface in the at least one other interface, and transferring the one or a plurality of data objects to the target interface.

According to another embodiment of the disclosure, it is provided a computer readable program, when executed on a computer system, adapted to perform any of the cross-interface data transfer method as described above.

According to a further aspect of the disclosure, it is provided a storage medium storing computer readable program. The computer readable program, when executed on a computer system, adapted to perform any of the cross-interface data transfer method as described above.

The cross-interface data transfer technique of the disclosure has been described with reference to the drawings. Via the intuitive and convenient data transfer method of the disclosure, in the process of data transfer, the interface capable of receiving data will be displayed on the currently displayed interface of the terminal in a certain manner, the user can move data to the target interface directly without the need of page jumping and executing any other operation such as copying, switching, pasting, and checking. Data transfer can be achieved through the moving of the selected data object. The operation is simplified, which can enhance operation efficiency and reduce operating cost.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. A cross-interface data transfer method, comprising:
displaying on a terminal interface at least one other interface capable of receiving one or a plurality of data objects when the one or a plurality of data objects on the terminal interface is operated in a predetermined way; and
determining one target interface in the at least one other interface, and transferring the one or a plurality of data objects to the target interface.

2. The cross-interface data transfer method of claim 1, wherein the predetermined way is dragging; the method further comprises: detecting the trajectory direction of dragging of the one or a plurality of data objects upon dragging; and
the process of displaying the at least one other interface comprises: displaying the at least one other interface adaptively according to the trajectory direction.

3. The cross-interface data transfer method of claim 2, wherein the process of displaying the at least one other interface comprises: displaying the at least one other interface in the edge region of the terminal interface corresponding to the trajectory direction.

4. The cross-interface data transfer method of claim 2, wherein the process of determining the target interface comprises: determining one interface in the at least one other interface to be the target interface if the one or a plurality of data objects is dragged to the interface and stayed for a predetermined time length.

5. The cross-interface data transfer method of claim 1, wherein the method further comprises:
searching for an external device capable of connecting to the terminal when the one or a plurality of data objects is being operated; and
acquiring an interface of the external device and other menu interface of the terminal, wherein the at least one other interface comprises the interface of the external device and the other menu interface of the terminal.

6. The cross-interface data transfer method of claim 5, wherein the method further comprises:
acquiring a relative position relationship between the terminal and the external device, determining that the interface of the external device will be displayed in the edge region of the terminal screen pointing to the external device according to the relative position relationship;
displaying the interface of the external device in the edge region of the terminal screen when the one or a plurality of data objects entering into the edge region of the terminal screen.

7. The cross-interface data transfer method of claim 1, wherein the method further comprises:
switching to an interface of the terminal on which the one or a plurality of data objects will be displayed if the target interface is the interface of the terminal;
transmitting the one or a plurality of data objects to an interface of the external device on which the one or a plurality of data objects will be displayed if the target interface is the interface of the external device.

8. The cross-interface data transfer method of claim 1, wherein the at least one other interface is displayed in the form of a thumbnail or symbol.

9. The cross-interface data transfer method of any of claims 1-8, wherein the data object comprises at least one of the following: application icons, documents, folders, audio files or video files, and pictures.

10. A terminal, comprising:
a displaying unit, configured to display on a terminal interface at least one other interface capable of receiving one or a plurality of data objects when the one or a plurality of data objects on the terminal interface is operated in a predetermined way; and
an cross-interface transferring unit, configured to determine one target interface in the at least one other interface and transfer the one or a plurality of data objects to the target interface.

11. The terminal of claim 10, wherein the displaying unit comprises:
a detecting unit, configured to detect the trajectory direction of dragging of the one or a plurality of data objects upon dragging; and
an adjusting unit, configured to adjust the displaying unit to display the at least one other interface adaptively according to the trajectory direction.

12. The terminal of claim 11, wherein the displaying unit is further configured to display the at least one other interface in the edge region of the terminal interface corresponding to the trajectory direction.

13. The terminal of claim 11, wherein the cross-interface transferring unit comprises:
a target interface selecting unit, configured to determine one interface in the at least one other interface to be the target interface if the one or a plurality of data objects is dragged to the interface and stayed for a predetermined time length.

14. The terminal of claim 10, wherein the displaying unit comprises:
a searching unit, configured to search for an external device capable of connecting to the terminal when the one or a plurality of data objects is being operated; and
an acquiring unit, configured to acquire an interface of the external device and other menu interface of the terminal, wherein the at least one other interface comprises the interface of the external device and the other menu interface of the terminal.

15. The terminal of claim 14, wherein
the acquiring unit is further configured to acquire a relative position relationship between the terminal and the external device, and determine that the interface of the external device will be displayed in the edge region of the terminal screen pointing to the external device according to the relative position relationship; and
the display unit is further configured to display the interface of the external device in the edge region of the terminal screen when the one or a plurality of data objects entering into the edge region of the terminal screen.

16. The terminal of claim 10, wherein the cross-interface transfer unit comprise:
a switching unit, configured to switch to an interface of the terminal on which the one or a plurality of data objects will be displayed if the target interface is the interface of the terminal; and
a data transmitting unit, configured to transmit the one or a plurality of data objects to an interface of the external device on which the one or a plurality of data objects will be displayed if the target interface is the interface of the external device.

17. The terminal of claim 10, wherein the displaying unit is configured to display the at least one other interface in the form of a thumbnail or symbol.

18. The terminal of any of claims 10-17, wherein the data object comprises at least one of the following: application icons, documents, folders, audio files or video files, and pictures.
